# EUROPEAN PATENT APPLICATION

(11) **EP 4 029 603 A1**
(43) Date of publication of application: **20.07.2022**
(21) Application number: 19952652.6
(22) Date of filing: 12.11.2019
(51) Int. Cl.: B01J 31/22, B01J 31/02

(54) **CATALYTIC OXIDATION CATALYST, PREPARATION METHOD THEREFOR, AND METHOD FOR DEEP TREATMENT OF ORGANIC MATTERS IN MDI SALINE**

(71) Applicant: Wanhua Chemical Group Co., Ltd., Yantai, Shandong 264006 (CN); Wanhua Chemical (Ningbo) Co., Ltd., Ningbo, Zhejiang 315812 (CN)
(72) Inventor: FAN, Zhenlong, Yantai, Shandong 264006 (CN); ZHANG, Hongke, Yantai, Shandong 264006 (CN); GAO, Xueshun, Yantai, Shandong 264006 (CN); ZENG, Fanxue, Yantai, Shandong 264006 (CN); WANG, Junjun, Yantai, Shandong 264006 (CN); ZHOU, Bo, Yantai, Shandong 264006 (CN); HENG, Hua, Yantai, Shandong 264006 (CN); LI, Yongfeng, Yantai, Shandong 264006 (CN); XING, Jinming, Yantai, Shandong 264006 (CN)
(74) Representative: Cabinet Laurent & Charras
(86) International application number: PCT/CN2019/117582
(87) International publication number: WO 2021/092763

(57) **Abstract**

Disclosed are a catalytic oxidation catalyst, a preparation method therefor, and a method for the deep treatment of organic matters in an MDI saline. The catalyst comprises a carrier and an active component, wherein the carrier is titanium dioxide, and the active component is an organic neutral ligand-metal complex type ionic liquid. The deep treatment method comprises: (1) adjusting the pH value of the MDI saline, and adding an oxidizing agent for treatment; and (2) bringing the MDI saline having been treated in step (1) into contact with the catalytic oxidation catalyst for a catalytic oxidation reaction to obtain a deeply treated saline. The catalyst can reduce or even avoid the loss of a metal from the catalyst while ensuring that the catalytic oxidation effect is improved. The deep treatment method is simple and readily practicable, has a high treatment efficiency, and does not produce secondary pollution.

## Description

### TECHNICAL FIELD

The present disclosure belongs to the technical field of wastewater treatment in chemical engineering and environmental engineering, and in particular, relates to a catalytic oxidation catalyst, a preparation method therefor, and a method for the deep treatment of organic matters in methylene diphenyl diisocyanate (hereinafter referred to as MDI) saline.

### BACKGROUND

In the condensation reaction process in an MDI apparatus, a large amount of caustic soda and pure water are usually used to neutralize and wash intermediate products, and a large amount of neutralized saline and washing water will be produced in this process. In the early stage, after extraction and stripping pretreatment, the neutralized saline and the washing water that are mixed are subjected to chemical oxidation and adsorption and then sent to chlor-alkali plant for further treatment. Now, in order to reduce the amount of saline and increase the salt concentration, the neutralized saline and the washing water have been treated separately. The neutralized saline is sent to chlor-alkali after extraction, stripping and catalytic oxidation, and the washing water is directly sent to biochemical treatment after extraction and stripping, thereby improving the comprehensive utilization rate of salt and water resources.

The content of sodium chloride in the MDI saline is 14% to 26%, the pH is 12 to 14, and the MDI saline contains organic compounds such as formic acid, phenol, aniline and so on. In this way, only after deep treatment can the MDI saline meet the acceptance index of chlor-alkali plant. Therefore, it is urgent to develop a deep processing technology with strong anti-fluctuation and high processing efficiency.

At present, the treatment technology in the MDI saline industry mainly adopts advanced oxidation, adsorption and evaporation. For example, patent document CN 101143753 A discloses a deep treatment method for waste salt water produced in the MDI producing process, where the waste salt water reacts with a chemical oxidant and then transmitted to an oxidation reactor for adsorption. However, this method has the disadvantages of large amount of oxidant and large amount of adsorbent.

Patent document CN 102139976 B discloses a treatment method for saliferous waste water from production process of MDI, where adsorption and neutralizing are carried out after strong acid is added for acidizing. However, in the combination process of the pH regulation and the adsorption of active carbon, there are some disadvantages such as low treatment efficiency and large amount of adsorbent, and high TOC effluent subsequently affects the service life of chlor-alkali ion membrane, so the influent index of the ion membrane needs to be strictly controlled.

In the field of MDI saline treatment, there are few cases of deep treatment by catalytic oxidation, which is mainly due to poor treatment effect of catalyst and metal loss, which limits the industrial application of catalytic oxidation technology. How to overcome this technical problem is the key to successfully achieve the efficient reuse of the MDI saline.

### SUMMARY

The object of the present disclosure is to provide a catalytic oxidation catalyst, a preparation method therefor and a method for the deep treatment method of organic matters in an MDI saline for the problem that catalyst metal is lost during the deep treatment of organic matters in the saline MDI saline by catalytic oxidation. After the addition of the catalytic oxidation catalyst of the present disclosure during the deep treatment of the MDI saline, not only the saline treatment effect can be effectively improved, but also the catalyst can reduce or even avoid the loss of metal in the catalyst while ensuring the improvement of the catalytic oxidation effect. In addition, the deep treatment method is simple and readily practicable, has a high treatment efficiency, and does not produce secondary pollution.

To achieve the above object, the present disclosure adopts the following technical solutions.

In one aspect, a catalytic oxidation catalyst is provided. The catalytic oxidation catalyst includes a carrier and an active component, where the carrier is titanium dioxide (TiO₂), and the active component is an organic neutral ligand-metal complex ionic liquid.

In the catalytic oxidation catalyst, based on the weight of the carrier, the content of the active component is 2 wt% to 20 wt% (e.g. 3 wt%, 5 wt%, 7 wt%, 10 wt%, 12 wt%, 14 wt%, 16 wt%, 18wt%), preferably 4 wt% to 10 wt%.

Here, " based on the weight percentage of the carrier, the content of the active component" can be understood as that the content of the active component is the percentage of the weight of the carrier.

According to the catalytic oxidation catalyst provided by the present disclosure, the organic neutral ligand-metal complex ionic liquid is a mixture of EG-CholineCl-NiCl₂ (ethylene glycol-choline chloride-nickel chloride) and EG-CholineCl-FeCl₃ (ethylene glycol-choline chloride-ferric chloride).

In a preferred embodiment, based on the weight of the carrier, the content of each component in the active component includes:
EG-CholineCl-NiCh 1.0 wt% to 10.0 wt% (e.g. 3 wt%, 3.5 wt%, 4.5 wt%, 5 wt%, 6 wt%, 8 wt%), more preferably 2.0 wt% to 4.0 wt%; and
EG-CholineCl-FeCl₃ 1.0 wt% to 10.0 wt% (e.g. 3 wt%, 3.5 wt%, 4.5 wt%, 5 wt%, 6 wt%, 8 wt%), more preferably 2.0 wt% to 4.0 wt%.

The applicant found that organic neutral ligand-metal complex ionic liquids have the characteristics of low melting point, low viscosity and good solubility. Such a liquid can dissolve metal oxides, metal chlorides, CO₂, SO₂ and other substances under certain conditions; and meanwhile, due to its extremely high polarity, can also dissolve polar substances such as formic acid, phenol, aniline and benzoic acid. The applicant also found that the organic neutral ligand-metal complex ionic liquid (as the active component) also has high catalytic activity. If such a liquid is immobilized on the surface of inorganic or organic materials, due to the characteristics of good solubility of ionic liquids and the high specific surface area of carrier materials, it can reduce the amount of ionic liquid in the catalytic oxidation reaction, improve the catalytic activity and prolong the service life.

In the mixture of EG-CholineCl-NiCh and EG-CholineCl-FeCl₃ as the active component, EG-CholineCl-NiCl₂ is the main active component, and EG-CholineCl-FeCl₃ is a modifier (i.e. catalyst promoter), which is used for modifying the performance of the catalyst. When the catalytic oxidation catalyst of the present disclosure is used in the method for the deep treatment of organic matters, in one aspect, the active component in the catalytic oxidation catalyst can improve the removal effect of organic matters, and in another aspect, the loss of main active component can be reduced or avoided and the stability of the catalyst can be increased.

When TiO₂ is used as the carrier and compounded with the organic neutral ligand-metal complex ionic liquid, the catalyst has the characteristics of high catalytic oxidation efficiency and no metal ion loss. Through the preliminary research, the applicant found that after activated carbon, diatomite, Al₂O₃ or molecular sieve that is used as the carrier is compounded with the organic neutral ligand-metal complex ionic liquid, due to the problems of low catalytic oxidation efficiency and metal loss, it cannot meet the use requirements of deep treatment of organic matters in the MDI saline.

Compared with the conventional technology where active metals are directly supported on carriers, the immobilization of the organic neutral ligand-metal complex ionic liquid has higher support efficiency and support stability. Because the ionic liquid has excellent solubility and catalysis, the loss of catalyst active metals can be fundamentally avoided, and the removal efficiency of organic matters can be greatly improved, thereby meeting the index requirements of the chlor-alkali ion membrane for organic matters and metal ions.

In another aspect, a preparation method of the catalytic oxidation catalyst described above is provided. The method includes: dissolving the active component in an organic solvent to obtain a solution containing the active component (i.e. an impregnation liquid), and bringing the carrier into contact with the solution containing the active component in the presence of an inert gas atmosphere for impregnation; and drying and calcining the solid obtained after the impregnation to obtain the catalytic oxidation catalyst.

According to the preparation method provided by the present disclosure, in some examples, the carrier is subjected to vacuum pretreatment before impregnation. In some preferred embodiments, the conditions of the vacuum pretreatment include: the treatment time is 10 minutes to 60 minutes (e.g. 20 minutes, 30 minutes, 40 minutes, 50 minutes), and the vacuum degree is 96.0 KPa to 98.0 KPa (absolute pressure).

In some examples, the organic solvent is selected from a small molecular alcohol having a molecular weight of 10 g/mol to 1000 g/mol, more preferably methanol. The amount of the organic solvent mentioned here is such that the active component is completely dissolved into a solution.

In some examples, the inert gas is nitrogen gas.

In the process of impregnation, the amount relationship between the active component and the carrier is quantified by volume. In some examples, the carrier is impregnated in excess of the solution containing the active component. In other examples, both the active component and the carrier can also be impregnated in equal volumes.

When the catalyst is prepared by impregnation, the time and temperature of the impregnation treatment are well known to those skilled in the art. In some examples, the impregnation time is 30 minutes to 240 minutes (i.e. 40 minutes, 50 minutes, 65 minutes, 80 minutes, 90 minutes, 100 minutes, 110 minutes), preferably 60 minutes to 120 minutes.

After the impregnation operation is completed, the solid products need to be subjected to posttreatment which generally includes drying and calcination. In some examples, the conditions of the drying include: the temperature is 60°C to 150°C (e.g. 80°C, 100°C, 120°C, 150°C) and the time is 1 hour to 5 hours (e.g. 2 hours, 3 hours, 4 hours). In some examples, the conditions of the calcination include: the temperature is 30°C to 4000°C (e.g. 350°C) and the time is 3 hours to 5 hours (e.g. 3.5 hours).

In some examples, the method for preparing EG-CholineCl-NiCh is as follows:
mixing ethylene glycol and choline chloride (preferably mixing equimolar amounts of ethylene glycol and choline chloride), stirring to form a uniform and transparent mixed liquid, adding NiCl₂ (preferably adding NiCl₂ equimolar to choline chloride), heating and stirring under the protection of nitrogen gas, and reacting at 60°C to 150°C (preferably 80°C to 110°C) for 1 hour to 5 hours (preferably 2 hours to 4 hours); and drying the viscous liquid obtained after reaction in vacuum at 60°C to 150°C for 5 hours to 10 hours to obtain EG-CholineCl-NiCh.

In some examples, the method for preparing EG-CholineCl-FeCl₃ is as follows:
mixing ethylene glycol and choline chloride (preferably mixing equimolar amounts of ethylene glycol and choline chloride), stirring to form a uniform and transparent mixed liquid, adding FeCl₃ (preferably adding FeCl₃ equimolar to choline chloride), heating and stirring under the protection of nitrogen gas, and reacting at 60°C to 150°C (preferably 80°C to 110°C) for 1 hour to 5 hours (preferably 2 hours to 4 hours); and drying the viscous liquid obtained after reaction in vacuum at 60°C to 150°C for 5 hours to 10 hours to obtain EG-CholineCl-FeCl₃.

In some examples, the prepared EG-CholineCl-NiCh is dissolved in methanol and the prepared EG-CholineCl-FeCl₃ is dissolved in methanol to prepare an impregnation liquid; in nitrogen atmosphere, the obtained impregnation solution is mixed with the TiO₂ carrier that is subjected to vacuum pretreatment for impregnation, preferably the carrier is impregnated in an excessive volume of impregnation solution, for 30 minutes to 240 minutes, preferably 60 minutes to 120 minutes; then the obtained solid is dried at 60°C to 150°C for 1 hour to 5 hours and then calcined at 300°C to 400°C for 3 hours to 5 hours to obtain a catalyst in which EG-CholineCl-NiCh and EG-CholineCl-FeCl₃ are supported on TiO₂.

In yet another aspect, a method for the deep treatment of organic matters in an MDI saline is provided. The method includes the following steps:
(1) adjusting the pH value of the MDI saline, and adding an oxidizing agent for treatment; and
(2) bringing the MDI saline having been treated in step (1) into contact with the catalytic oxidation catalyst for a catalytic oxidation reaction to obtain a deeply treated saline;
wherein, the catalytic oxidation catalyst is the catalyst as described above or a catalyst prepared by the preparation method as described above. For example, the mixture of EG-CholineCl-NiCl₂ (ethylene glycol-choline chloride-nickel chloride) and EG-CholineCl-NiCh (ethylene glycol-choline chloride-ferric chloride) is used as an active component and is supported on the catalytic oxidation catalyst on titanium dioxide carrier.

When the MDI saline is treated, the oxidizing agent and organic matters such as formic acid, phenol and aniline contained in the saline to be treated are first adsorbed and dissolved on the surface of the catalytic oxidation catalyst, the oxidizing agent produces active oxygen radicals under the action of the active component and then oxidizes and decomposes organic matters such as formic acid, phenol and aniline on the catalyst surface to produce CO₂, H₂O and small molecular compounds. The catalytic oxidation mechanism is as follows:

ClO⁻ → Cl⁻ + [O], i.e. CAT + ClO⁻ → CAT-O + Cl⁻ ①;

ORG + CAT-O → ORG-O + CAT ②;

ORG-O + CAT-O→ H₂O + CAT + CO₃²⁻ ③.

[O] represents active oxygen radicals, CAT represents the catalyst, ORG represents the organic matters, CAT-O represents the active site on the catalyst, on which there is [O], and ORG-O represents the organic matters combined with [O].

Formula ① is the process in which the oxidizing agent is catalyzed by the catalyst to produce [O] on the catalyst; Formula ② is the process in which the catalyst having the [O] active site contacts with the organic matters in the MDI saline to be treated and transfers [O] to the organic matters; Formula ③ is the process in which the organic matters combined with [O] are decomposed into small molecules or carbon dioxide and water under the action of the catalyst.

According to the deep treatment method provided by the present disclosure, preferably in step (1), the composition of the MDI saline includes:
TOC ≤ 60 mg/L, for example, 0 mg/L to 40 mg/L;
TN ≤ 5 mg/L, for example, 0 mg/L to 4 mg/L;
formic acid ≤ 60 mg/L, for example, 0 mg/L to 50 mg/L;
phenol ≤ 30 mg/L, for example, 0 mg/L to 20 mg/L; and
aniline ≤ 10 mg/L, for example, 0 mg/L to 5 mg/L.

Here TOC represents the total organic carbon and TN represents the total nitrogen.

In step (1), the operating process conditions such as the pH value, temperature and treatment time should be controlled to a certain range, mainly to ensure the efficiency of the catalytic oxidation reaction in the next step and meanwhile avoid the loss of active components of the catalyst, otherwise the recovery and treatment of downstream saline will be affected. Of course, for the temperature and treatment time, the increase of the reaction temperature and the decrease of the treatment time will be beneficial to the improvement of treatment effect. In some examples, the operating process conditions of step (1) include: the pH value is adjusted to 9 to 14 (e.g. 9.5, 10.5, 11, 12, 13.5), preferably 10 to 13; the residence time of adding the oxidizing agent is 0.25 hour to 2 hours (e.g. 0.4 hour, 0.6 hour, 0.8 hour, 1.5 hours), preferably 0.5 hour to 1 hour; and the temperature of adding the oxidizing agent is 20°C to 80°C (e.g. 25°C, 35°C, 40°C, 50°C, 60°C, 75°C), preferably 30°C to 70°C. In some examples, the pH value of the system can be adjusted by adding an aqueous hydrochloric acid solution.

The adjustment of the pH value and the addition of the oxidizing agent can be carried out in any reactor known in the art, preferably using a regulating tank, a stirred tank or a static mixer.

In some examples, in step (1), the oxidizing agent is selected from liquid chlorine, chlorine gas, sodium hypochlorite or wastewater containing free chlorine, preferably sodium hypochlorite or wastewater containing free chlorine. The addition amount of the oxidizing agent is calculated by the amount of TOC in the MDI saline, and n(TOC):n(available chlorine in the oxidizing agent, based on chlorine gas) equals to 0.2 to 5 (e.g. 0.4, 0.6, 0.8, 1.0, 1.5, 1.8, 2.5, 3.0, 4.0, 4.5), preferably 0.5 to 2.

When the MDI saline treated in step (1) is subjected to catalytic oxidation reaction, any reactor known in the art can be selected to achieve the catalytic oxidation reaction. For example, the MDI saline is sent to a catalytic oxidation reactor for reaction. In some examples, the operating process conditions of step (2) include: the pH value of the system is 9 to 14, preferably 10 to 13. If the pH value in the reaction system is too low, the active metals Ni and Fe in the catalyst will be lost, and if the pH value is too high, the impurity metal Al in the catalyst carrier will be lost. Therefore, it is necessary to regulate the pH value. The operating process conditions of step (2) further include: the volume space velocity is 1 h⁻¹ to 10 h⁻¹, preferably 3 h⁻¹ to 8 h⁻¹. If the volume space velocity is too high, the oxidizing agent in the reaction system cannot be fully converted into active oxygen radicals, the characteristic pollutants in the MDI saline to be treated cannot be fully removed, and thus the acceptance index of the chlor-alkali process cannot be met; If the volume space velocity is too low, although the catalytic oxidation effect can meet the requirements, the amount of the catalyst will increase, resulting in the increase of the operation cost. The reaction temperature is 20°C to 80°C, preferably 30°C to 70°C.

In the system for the deep treatment of the MDI saline, in the absence of catalyst, the removal efficiency of organic matters in the MDI saline by the oxidizing agent is low, and active oxygen radicals cannot be quickly formed. Under the action of the catalytic oxidation catalyst of the present disclosure, the oxidizing agent can rapidly form active oxygen free radicals to decompose organic matters such as formic acid, phenol, aniline and the like, the treatment effect is remarkable, and at the same time, the metal loss in the catalyst can be reduced or avoided.

In the deep treatment method of the present disclosure, when the catalytic oxidation catalyst is adopted, in one aspect, the removal effect of organic matters in the MDI saline can be improved, and in another aspect, the metal loss in the active component can be reduced, the stability of the catalyst can be increased, and the occurrence of secondary pollution can be avoided. Because the catalyst obtained by the present disclosure has such performance, the technical obstacles existing in the use of the catalyst in the deep treatment process of the organic matters in the MDI saline can be overcome, and the process effect of the deep treatment of the organic matters in the MDI saline can be effectively improved.

In the present disclosure, most organic matters such as formic acid, phenol and aniline in the MDI saline can be removed, and meanwhile, in the treated saline, TOC is less than or equal to 10 mg/L, TN is less than or equal to 3 mg/L, SS is less than or equal to 1 mg/L, Ca + Mg is less than or equal to 0.02 mg/L, Si is less than or equal to 2.3 mg/L, Al, I, Ba, Sr all are less than or equal to 0.1 mg/L, Fe is less than or equal to 0.05 mg/L and Ni is less than or equal to 0.1 mg/L, which can meet the acceptance index requirements of chlor-alkali plants. Moreover, the content of metal ions in the treated MDI saline does not increase, i.e., the catalytic oxidation catalyst adopted does not suffer from metal loss, and all indexes meet the acceptance standard of the chlor-alkali ion membrane. A small amount of waste gas in the catalytic oxidation reaction meets the discharge index and can be directly discharged. According to the deep treatment method provided by the present disclosure, preferably, after step (2), the obtained deeply treated saline is transported to an ion membrane caustic soda production apparatus of a chlor-alkali plant as a production raw material to prepare caustic soda, chlorine gas, hydrochloric acid and hydrogen gas required for MDI production.

The present disclosure not only solves the problem that the deep treatment efficiency of organic matters in the MDI saline is not high, but also overcomes the technical obstacle of the catalyst metal loss in the process of using the catalyst. The deep treatment method has simple process flow, high organic matter removal efficiency, low operation cost and high automation degree, and successfully achieves the efficient reuse of the MDI saline.

Compared with the existing art, the technical solutions of the present disclosure have beneficial effects described below.
(1) In the deep treatment method of the MDI saline, organic matters in the saline is oxidized and decomposed into CO₂, H₂O and small molecular compounds through the catalytic oxidation process. Compared with the oxidation process used alone, the catalytic oxidation efficiency is high (the oxidation efficiency after catalysis can be improved by 30% to 60%), and the method is simple and easy to operate, with low operation cost and no secondary pollution.
(2) The catalytic oxidation catalyst of the present disclosure selects two kinds of ionic liquids EG-CholineCl-NiCl₂ and EG-CholineCl-FeCl₃ for immobilization, and after the two kinds of ionic liquids act with the oxidizing agent, the oxidizing agent can be rapidly converted into a large number of active oxygen free radicals so that there is no metal loss (the difference of the metal content in the inlet and outlet water is less than or equal to 0.01 mg/L), while improving the catalytic oxidation effect on organic matters in the waste water. In addition, the treated acceptable saline (e.g. TOC ≤ 10 mg/L, TN ≤ 3 mg/L, SS ≤ 1 mg/L, Si ≤ 2.3 mg/L, Fe ≤ 0.05 mg/L, Ni ≤ 0.1 mg/L) is sent to the chlor-alkali plant as the production raw material to further produce chemical raw materials such as chlorine gas and caustic soda flakes so that sodium chloride resources are recycled and the technology integration level is high.
(3) The catalytic oxidation process of the present disclosure is not only suitable for the treatment of the MDI saline, but also suitable for the deep treatment of other wastewater containing medium and low concentrations of organic matters.

### DETAILED DESCRIPTION

To provide a clearer understanding of technical features and content of the present disclosure, a detailed description of the preferred embodiments of the present disclosure will be given below. The examples illustrate the preferred embodiments of the present disclosure, but it should be understood that the present disclosure may be implemented in various ways and should not be limited to the embodiments set forth herein.

### 1. Main equipment models and raw material sources

The saline tank, static mixer, saline transfer pump and catalytic oxidation reactor were all purchased from YANTAI KELI CHEMICAL EQUIPMENT CO., LTD.

The muffle furnace, model VULCAN 3-1750, was purchased from NEYTECH, USA.

The MDI saline to be treated taken from the MDI production equipment came from a WANHUA CHEMICAL MDI apparatus, and the taken MDI saline to be treated was transferred to the saline tank, sampled and analyzed after cooling. The components contained in the water of the MDI saline and contents thereof are shown in Table 1 below.

**Table 1 Components in the water of the MDI saline and contents thereof**

| MDI saline | NaCl/ wt% | TOC/ mg/L | TN/ mg/ | Formic acid/ mg/L | Phenol / mg/L | Aniline/ mg/L |
|---|---|---|---|---|---|---|
| Comparative Examples 3 to 4 and Examples 6 to 10 | 24 | 60 | 3.0 | 60 | 30 | 10 |
| Example 11 | 19 | 45 | 1.2 | 38 | 12 | 3.2 |
| Example 12 | 16 | 20 | 0.5 | 10 | 5 | 0.3 |

Choline chloride, ethylene glycol, nickel chloride, ferric chloride, methanol and ethanol, analytically pure, were purchased from SINOPHARM CHEMICAL REAGENT CO., LTD.

The TiO₂ carrier was purchased from SINOPHARM CHEMICAL REAGENT CO., LTD.

33 wt% aqueous hydrochloric acid solution and sodium hypochlorite solution came from WANHUA CHEMICAL.

**The preparation method of EG-CholineCl-NiCl₂ is as follows:** equimolar amounts of ethylene glycol and choline chloride (CholineCl) were mixed and stirred to obtain a uniform solution of ethylene glycol and choline chloride (CholineCl); the solution was mixed with NiCl₂ (in which equimolar amounts of choline chloride and NiCl₂ were mixed based on choline chloride in the solution), heated and stirred under the protection of nitrogen gas, and reacted at 100°C for 4 hours; and the viscous liquid obtained after reaction was dried in vacuum drying at 90°C for 10 hours to obtain EG-CholineCl-NiCh.

**The preparation method of EG-CholineCl-FeCl₃ is as follows:** equimolar amounts of ethylene glycol and choline chloride (CholineCl) were mixed and stirred to obtain a uniform solution of ethylene glycol and choline chloride (CholineCl); the solution was mixed with FeCl₃ (in which equimolar amounts of choline chloride and FeCl₃ were mixed based on choline chloride in the solution), heated and stirred under the protection of nitrogen gas, and reacted at 100°C for 4 hours; and the viscous liquid obtained after reaction was dried in vacuum drying at 90°C for 10 hours to obtain EG-CholineCl-FeCl₃.

### 2. Main analysis and test methods

The TOC and TN analyzers were produced by JENA, Germany.

The SS and Si were analyzed using a spectrophotometer produced by HACH, USA.

Metal ions were analyzed by inductively coupled plasma atomic emission spectrometry-mass spectrometry (ICP-MS).

Formic acid, phenol and aniline were analyzed by a liquid chromatography (LC) system produced by AGILENT, USA.

The NaCl content was analyzed by an ion chromatography (IC) system produced by METROHM, Switzerland.

### Comparative Preparation Example 1 (preparation of 1# catalyst):

20 g of TiO₂ sample was placed in an impregnation bottle for vacuum pretreatment, where the vacuum pretreatment time was 10 minutes and the vacuum degree was 96.0 KPa (absolute pressure); and meanwhile 10.0 mL of NiCl₂-containing methanol solution with a concentration of 0.20 g/mL and 13.3 mL of FeCl₃-containing methanol solution with a concentration of 0.15 g/mL were added into an aqueous methanol solution with a methanol concentration of 10 wt% to prepare an impregnation solution with a total volume of 30 mL. Then the above impregnation solution was added into a vacuum impregnation bottle filled with TiO₂ carrier and mixed evenly. The TiO₂ carrier was impregnated in excessive volume of impregnation solution. After impregnation for 30 minutes, the impregnated product was taken out, dried in an oven at 90°C for 2 hours, and then calcined in a muffle furnace at 300°C for 4 hours to obtain 1# catalyst.

In the resulting 1# catalyst, the content percentages of NiCl₂ and FeCl₃ were 10.0 wt% and 10.0 wt%, respectively, based on the weight of TiO₂ carrier as 1.

### Comparative Preparation Example 2 (preparation of 2# catalyst):

20 g of TiO₂ sample was placed in an impregnation bottle for vacuum pretreatment, where the vacuum pretreatment time was 30 minutes and the vacuum degree was 98.0 KPa (absolute pressure); and meanwhile 10.0 mL of CholineCl-NiCl₂-containing methanol solution with a concentration of 0.20 g/mL and 6.65 mL of CholineCl-FeCl₃-containing methanol solution with a concentration of 0.30 g/mL were added into an aqueous methanol solution with a methanol concentration of 10 wt% to prepare an impregnation solution with a total volume of 30 mL. Then the above impregnation solution was added into a vacuum impregnation bottle filled with TiO₂ carrier and mixed evenly. The TiO₂ carrier was impregnated in excessive volume of impregnation solution. After impregnation for 210 minutes, the impregnated product was taken out, dried in an oven at 150°C for 1 hour, and then calcined in a muffle furnace at 300°C for 5 hours to obtain 2# catalyst.

In the resulting 2# catalyst, the content percentages of CholineCl-NiCl₂ and CholineCl-FeCl₃ were 10.0 wt% and 10.0 wt%, respectively, based on the weight of TiO₂ carrier as 1.

### Preparation Example 1 (preparation of 3# catalyst):

20 g of TiO₂ sample was placed in an impregnation bottle for vacuum pretreatment, where the vacuum pretreatment time was 40 minutes and the vacuum degree was 97.0 KPa (absolute pressure); and meanwhile 10.0 mL of EG-CholineCl-NiCl₂-containing methanol solution with a concentration of 0.20 g/mL and 6.65 mL of EG-CholineCl-FeCl₃-containing methanol solution with a concentration of 0.30 g/mL were added into an aqueous methanol solution with a methanol concentration of 10 wt% to prepare an impregnation solution with a total volume of 30 mL. Then the above impregnation solution was added into a vacuum impregnation bottle filled with TiO₂ carrier and mixed evenly. The TiO₂ carrier was impregnated in excessive volume of impregnation solution. After impregnation for 60 minutes, the impregnated product was taken out, dried in an oven at 120°C for 2 hours, and then calcined in a muffle furnace at 300°C for 4 hours to obtain 3# catalyst.

In the resulting 3# catalyst, the content percentages of EG-CholineCl-NiCh and EG-CholineCl-FeCl₃ were 10.0 wt% and 10.0 wt%, respectively, based on the weight of TiO₂ carrier as 1.

### Preparation Example 2 (preparation of 4# catalyst):

20 g of TiO₂ sample was placed in an impregnation bottle for vacuum pretreatment, where the vacuum pretreatment time was 10 minutes and the vacuum degree was 96.0 KPa (absolute pressure); and meanwhile 1.0 mL of EG-CholineCl-NiCl₂-containing methanol solution with a concentration of 0.20 g/mL and 1.4 mL of EG-CholineCl-FeCl₃-containing methanol solution with a concentration of 0.15 g/mL were added into an aqueous methanol solution with a methanol concentration of 10 wt% to prepare an impregnation solution with a total volume of 20 mL. Then the above impregnation solution was added into a vacuum impregnation bottle filled with TiO₂ carrier and mixed evenly. The TiO₂ carrier was impregnated in excessive volume of impregnation solution. After impregnation for 240 minutes, the impregnated product was taken out, dried in an oven at 150°C for 5 hours, and then calcined in a muffle furnace at 400°C for 5 hours to obtain 4# catalyst.

In the resulting 4# catalyst, the content percentages of EG-CholineCl-NiCh and EG-CholineCl-FeCl₃ were 1.0 wt% and 1.0 wt%, respectively, based on the weight of TiO₂ carrier as 1.

### Preparation Example 3 (preparation of 5# catalyst):

20 g of TiO₂ sample was placed in an impregnation bottle for vacuum pretreatment, where the vacuum pretreatment time was 30 minutes and the vacuum degree was 96.0 KPa (absolute pressure); and meanwhile 4.0 mL of EG-CholineCl-NiCh-containing methanol solution with a concentration of 0.20 g/mL and 8.0 mL of EG-CholineCl-FeCl₃-containing methanol solution with a concentration of 0.15 g/mL were added into an aqueous methanol solution with a methanol concentration of 10 wt% to prepare an impregnation solution with a total volume of 20 mL. Then the above impregnation solution was added into a vacuum impregnation bottle filled with TiO₂ carrier and mixed evenly. The TiO₂ carrier was impregnated in excessive volume of impregnation solution. After impregnation for 60 minutes, the impregnated product was taken out, dried in an oven at 90°C for 3 hours, and then calcined in a muffle furnace at 350°C for 4 hours to obtain 5# catalyst.

In the resulting 5# catalyst, the content percentages of EG-CholineCl-NiCh and EG-CholineCl-FeCl₃ were 4.0 wt% and 6.0 wt%, respectively, based on the weight of TiO₂ carrier as 1.

### Preparation Example 4 (preparation of 6# catalyst):

20 g of TiO₂ sample was placed in an impregnation bottle for vacuum pretreatment, where the vacuum pretreatment time was 40 minutes and the vacuum degree was 97.0 KPa (absolute pressure); and meanwhile 16.0 mL of EG-CholineCl-NiCl₂-containing methanol solution with a concentration of 0.10 g/mL and 3.0 mL of EG-CholineCl-FeCl₃-containing methanol solution with a concentration of 0.20 g/mL were added into an aqueous methanol solution with a methanol concentration of 10 wt% to prepare an impregnation solution with a total volume of 30 mL. Then the above impregnation solution was added into a vacuum impregnation bottle filled with TiO₂ carrier and mixed evenly. The TiO₂ carrier was impregnated in excessive volume of impregnation solution. After impregnation for 90 minutes, the impregnated product was taken out, dried in an oven at 120°C for 2 hours, and then calcined in a muffle furnace at 320°C for 3 hours to obtain 6# catalyst.

In the resulting 6# catalyst, the content percentages of EG-CholineCl-NiCh and EG-CholineCl-FeCl₃ were 8.0 wt% and 3.0 wt%, respectively, based on the weight of TiO₂ carrier as 1.

### Preparation Example 5 (preparation of 7# catalyst):

20 g of TiO₂ sample was placed in an impregnation bottle for vacuum pretreatment, where the vacuum pretreatment time was 40 minutes and the vacuum degree was 97.0 KPa (absolute pressure); and meanwhile 6.0 mL of EG-CholineCl-NiCl₂-containing methanol solution with a concentration of 0.20 g/mL and 6.0 mL of EG-CholineCl-FeCl₃-containing methanol solution with a concentration of 0.30 g/mL were added into an aqueous methanol solution with a methanol concentration of 10 wt% to prepare an impregnation solution with a total volume of 30 mL. Then the above impregnation solution was added into a vacuum impregnation bottle filled with TiO₂ carrier and mixed evenly. The TiO₂ carrier was impregnated in excessive volume of impregnation solution. After impregnation for 60 minutes, the impregnated product was taken out, dried in an oven at 100°C for 5 hours, and then calcined in a muffle furnace at 300°C for 5 hours to obtain 7# catalyst.

In the resulting 7# catalyst, the content percentages of EG-CholineCl-NiCh and EG-CholineCl-FeCl₃ were 6.0 wt% and 9.0 wt%, respectively, based on the weight of TiO₂ carrier as 1.

The catalysts obtained in the above Preparation Examples and Comparative Preparation Examples were used for deep treatment of organic matters in the MDI saline as shown in Table 1.

### Example 6 (with 3# catalyst used):

The method for the deep treatment of organic matters in an MDI saline includes the following steps.
(1) The pH value of the MDI saline was adjusted to 11.0 with 33 wt% aqueous hydrochloric acid solution, where the TOC of the MDI saline was 60 mg/L and the temperature of the system was controlled to 50°C; and the MDI saline system was mixed with 200 mg/L sodium hypochlorite in a static mixer for treatment for 1 hour.
(2) The MDI saline treated in step (1) was introduced into a catalytic oxidation reactor through a saline transfer pump and contacted with 3# catalyst in a reactor for catalytic oxidation reaction, where the reaction temperature was 50°C, the volume space velocity was 5 h⁻¹, and the pH value of the system was 11.0; and under the action of 3# catalyst, sodium hypochlorite was rapidly converted into active oxygen radicals and decomposed macromolecular organic matters in the wastewater into small molecular compounds, carbon dioxide and water to obtain deeply treated saline. After catalytic oxidation, TOC of the saline was 6 mg/L, the TOC removal rate was 90.0%, the TN content was 0.2 mg/L, the formic acid content was 0.1 mg/L, the phenol content was 0.1 mg/L, the aniline content was 0.1 mg/L, the SS content was 0 mg/L, the Si content was 0.2 mg/L, no Ni and Fe were detected in the effluent, and there was no metal loss.

### Example 7 (with 4# catalyst used)

The method for the deep treatment of organic matters in an MDI saline includes the following steps.
(1) The pH value of the MDI saline was adjusted to 11.0 with 33 wt% aqueous hydrochloric acid solution, where the TOC of the MDI saline was 60 mg/L and the temperature of the system was controlled to 50°C; and the MDI saline system was mixed with 200 mg/L sodium hypochlorite in a static mixer for treatment for 1 hour.
(2) The MDI saline treated in step (1) was introduced into a catalytic oxidation reactor through a saline transfer pump and contacted with 4# catalyst in a reactor for catalytic oxidation reaction, where the reaction temperature was 50°C, the volume space velocity was 5 h⁻¹, and the pH value of the system was 11.0; and under the action of 4# catalyst, sodium hypochlorite was rapidly converted into active oxygen radicals and decomposed macromolecular organic matters in the wastewater into small molecular compounds, carbon dioxide and water to obtain deeply treated saline. After catalytic oxidation, TOC of the saline was 7 mg/L, the TOC removal rate was 88.3%, the TN content was 0.2 mg/L, the formic acid content was 0.2 mg/L, the phenol content was 0.1 mg/L, the aniline content was 0.1 mg/L, the SS content was 0 mg/L, the Si content was 0.2 mg/L, no Ni and Fe were detected in the effluent, and there was no metal loss.

### Example 8 (with 5# catalyst used)

The method for the deep treatment of organic matters in an MDI saline includes the following steps.
(1) The pH value of the MDI saline was adjusted to 11.0 with 33 wt% aqueous hydrochloric acid solution, where the TOC of the MDI saline was 60 mg/L and the temperature of the system was controlled to 50°C; and the MDI saline system was mixed with 200 mg/L sodium hypochlorite in a static mixer for treatment for 1 hour.
(2) The MDI saline treated in step (1) was introduced into a catalytic oxidation reactor through a saline transfer pump and contacted with 5# catalyst in a reactor for catalytic oxidation reaction, where the reaction temperature was 50°C, the volume space velocity was 5 h⁻¹, and the pH value of the system was 11.0; and under the action of 5# catalyst, sodium hypochlorite was rapidly converted into active oxygen radicals and decomposed macromolecular organic matters in the wastewater into small molecular compounds, carbon dioxide and water to obtain deeply treated saline. After catalytic oxidation, TOC of the saline was 6 mg/L, the TOC removal rate was 90.0%, the TN content was 0.2 mg/L, the formic acid content was 0.1 mg/L, the phenol content was 0.1 mg/L, the aniline content was 0.1 mg/L, the SS content was 0 mg/L, the Si content was 0.2 mg/L, no Ni and Fe were detected in the effluent, and there was no metal loss.

### Example 9 (with 6# catalyst used)

The method for the deep treatment of organic matters in an MDI saline includes the following steps.
(1) The pH value of the MDI saline was adjusted to 11.0 with 33 wt% aqueous hydrochloric acid solution, where the TOC of the MDI saline was 60 mg/L and the temperature of the system was controlled to 50°C; and the MDI saline system was mixed with 200 mg/L sodium hypochlorite in a static mixer for treatment for 1 hour.
(2) The MDI saline treated in step (1) was introduced into a catalytic oxidation reactor through a saline transfer pump and contacted with 6# catalyst in a reactor for catalytic oxidation reaction, where the reaction temperature was 50°C, the volume space velocity was 5 h⁻¹, and the pH value of the system was 11.0; and under the action of 6# catalyst, sodium hypochlorite was rapidly converted into active oxygen radicals and decomposed macromolecular organic matters in the wastewater into small molecular compounds, carbon dioxide and water to obtain deeply treated saline. After catalytic oxidation, TOC of the saline was 6 mg/L, the TOC removal rate was 90.0%, the TN content was 0.1 mg/L, the formic acid content was 0.1 mg/L, the phenol content was 0.1 mg/L, the aniline content was 0.1 mg/L, the SS content was 0 mg/L, the Si content was 0.2 mg/L, no Ni and Fe were detected in the effluent, and there was no metal loss.

### Example 10 (with 7# catalyst used)

The method for the deep treatment of organic matters in an MDI saline includes the following steps.
(1) The pH value of the MDI saline was adjusted to 11.0 with 33 wt% aqueous hydrochloric acid solution, where the TOC of the MDI saline was 60 mg/L and the temperature of the system was controlled to 50°C; and the MDI saline system was mixed with 200 mg/L sodium hypochlorite in a static mixer for treatment for 1 hour.
(2) The MDI saline treated in step (1) was introduced into a catalytic oxidation reactor through a saline transfer pump and contacted with 7# catalyst in a reactor for catalytic oxidation reaction, where the reaction temperature was 50°C, the volume space velocity was 5 h⁻¹, and the pH value of the system was 11.0; and under the action of 7# catalyst, sodium hypochlorite was rapidly converted into active oxygen radicals and decomposed macromolecular organic matters in the wastewater into small molecular compounds, carbon dioxide and water to obtain deeply treated saline. After catalytic oxidation, TOC of the saline was 6 mg/L, the TOC removal rate was 90.0%, the TN content was 0.2 mg/L, the formic acid content was 0.1 mg/L, the phenol content was 0.1 mg/L, the aniline content was 0.1 mg/L, the SS content was 0 mg/L, the Si content was 0.2 mg/L, no Ni and Fe were detected in the effluent, and there was no metal loss.

### Example 11 (with 5# catalyst used)

The method for the deep treatment of organic matters in an MDI saline includes the following steps.
(1) The pH value of the MDI saline was adjusted to 12.0 with 33 wt% aqueous hydrochloric acid solution, where the TOC of the MDI saline was 45 mg/L and the temperature of the system was controlled to 70°C; and the MDI saline system was mixed with 150 mg/L sodium hypochlorite in a static mixer for treatment for 2 hours.
(2) The MDI saline treated in step (1) was introduced into a catalytic oxidation reactor through a saline transfer pump and contacted with 5# catalyst in a reactor for catalytic oxidation reaction, where the reaction temperature was 70°C, the volume space velocity was 7 h⁻¹, and the pH value of the system was 12.0; and under the action of 5# catalyst, sodium hypochlorite was rapidly converted into active oxygen radicals and decomposed macromolecular organic matters in the wastewater into small molecular compounds, carbon dioxide and water to obtain deeply treated saline. After catalytic oxidation, TOC of the saline was 5 mg/L, the TOC removal rate was 88.9%, the TN content was 0.1 mg/L, the formic acid content was 0.1 mg/L, the phenol content was 0.1 mg/L, the aniline content was 0.1 mg/L, the SS content was 0 mg/L, the Si content was 0.1 mg/L, no Ni and Fe were detected in the effluent, and there was no metal loss.

### Example 12 (with 5# catalyst used)

The method for the deep treatment of organic matters in an MDI saline includes the following steps.
(1) The pH value of the MDI saline was adjusted to 10.0 with 33 wt% aqueous hydrochloric acid solution, where the TOC of the MDI saline was 20 mg/L and the temperature of the system was controlled to 30°C; and the MDI saline system was mixed with 100 mg/L sodium hypochlorite in a static mixer for treatment for 0.25 hour.
(2) The MDI saline treated in step (1) was introduced into a catalytic oxidation reactor through a saline transfer pump and contacted with 5# catalyst in a reactor for catalytic oxidation reaction, where the reaction temperature was 30°C, the volume space velocity was 8 h⁻¹, and the pH value of the system was 10.0; and under the action of 5# catalyst, sodium hypochlorite was rapidly converted into active oxygen radicals and decomposed macromolecular organic matters in the wastewater into small molecular compounds, carbon dioxide and water to obtain deeply treated saline. After catalytic oxidation, TOC of the saline was 4 mg/L, the TOC removal rate was 80.0%, the TN content was 0.05 mg/L, no formic acid, phenol and aniline content were detected, the SS content was 0 mg/L, the Si content was 0.1 mg/L, no Ni and Fe were detected in the effluent, and there was no metal loss.

### Comparative Example 3 (with 1# catalyst used)

The method for the deep treatment of organic matters in an MDI saline includes the following steps.
(1) The pH value of the MDI saline was adjusted to 11.0 with 33 wt% aqueous hydrochloric acid solution, where the TOC of the MDI saline was 60 mg/L and the temperature of the system was controlled to 50°C; and the MDI saline system was mixed with 200 mg/L sodium hypochlorite in a static mixer for treatment for 1 hour.
(2) The MDI saline treated in step (1) was introduced into a catalytic oxidation reactor through a saline transfer pump and contacted with 1# catalyst in a reactor for catalytic oxidation reaction, where the reaction temperature was 50°C, the volume space velocity was 5 h⁻¹, and the pH value of the system was 11.0; and under the action of 1# catalyst, sodium hypochlorite was rapidly converted into active oxygen radicals and decomposed macromolecular organic matters in the wastewater into small molecular compounds, carbon dioxide and water to obtain deeply treated saline. After catalytic oxidation, TOC of the saline was 13 mg/L, the TOC removal rate was 78.3%, the TN content was 1.2 mg/L, the formic acid content was 0.5 mg/L, the phenol content was 0.4 mg/L, the aniline content was 1.8 mg/L, the SS content was 0 mg/L, the Si content was 0.2 mg/L, but 0.2 mg/L Ni and 0.4 mg/L Fe were detected in the effluent, and there was metal loss.

### Comparative Example 4 (with 2# catalyst used)

The method for the deep treatment of organic matters in an MDI saline includes the following steps.
(1) The pH value of the MDI saline was adjusted to 11.0 with 33 wt% aqueous hydrochloric acid solution, where the TOC of the MDI saline was 60 mg/L and the temperature of the system was controlled to 50°C; and the MDI saline system was mixed with 200 mg/L sodium hypochlorite in a static mixer for treatment for 1 hour.
(2) The MDI saline treated in step (1) was introduced into a catalytic oxidation reactor through a saline transfer pump and contacted with 2# catalyst in a reactor for catalytic oxidation reaction, where the reaction temperature was 50°C, the volume space velocity was 5 h⁻¹, and the pH value of the system was 11.0; and under the action of 2# catalyst, sodium hypochlorite was rapidly converted into active oxygen radicals and decomposed macromolecular organic matters in the wastewater into small molecular compounds, carbon dioxide and water to obtain deeply treated saline. After catalytic oxidation, TOC of the saline was 10 mg/L, the TOC removal rate was 83.3%, the TN content was 0.3 mg/L, the formic acid content was 0.2 mg/L, the phenol content was 0.1 mg/L, the aniline content was 0.6 mg/L, the SS content was 0 mg/L, the Si content was 0.2 mg/L, but 0.05 mg/L Ni and 0.08 mg/L Fe were detected in the effluent, and there was metal loss.

### Test conclusions:

(1) As can be seen from the MDI saline deep treatment results of Comparative Examples 3 to 4 and Examples 6 to12, the treatment effect of the MDI saline by catalysts supported by a metal alone or catalysts supported by a metal complex ionic liquid alone is poor, and there is also metal loss; however, the catalyst supported by an organic neutral ligand-metal complex ionic liquid can successfully solve the above problem and significantly reduce the contents of formic acid, phenol and aniline in the MDI saline.
(2) As can be seen from the MDI saline deep treatment results of Examples 6 to 12, the catalyst supported by an organic neutral ligand-metal complex ionic liquid can meet the deep treatment requirements of the MDI saline under certain conditions, the treated saline index meets the acceptance standard of the chlor-alkali plant and is sent to the chlor-alkali plant as a production raw material to further produce chemical raw materials such as chlorine gas and caustic soda flakes; and the content of sodium chloride in the wastewater before and after treatment remains basically unchanged, which can achieve the recycling of sodium chloride resources.

In addition, when the support amount of the active component of the catalyst supported by the organic neutral ligand-metal complex ionic liquid obtained in the present disclosure is 1 wt% or more, the effect requirements of the deep treatment of the MDI saline can be achieved. Under the same saline deep treatment effect, the reasonable control of the support amount of the active component can reduce the preparation cost of the catalyst and ensure the use efficiency of the catalyst.

The descriptions of the various embodiments of the present disclosure have been presented for purposes of illustration, but are not intended to be exhaustive or limited to the embodiments disclosed. Various modifications and variations will be apparent to those of ordinary skill in the art without departing from the scope and spirit of the described embodiments.

## Claims

1. A catalytic oxidation catalyst, comprising a carrier and an active component, wherein the carrier is titanium dioxide, and the active component is an organic neutral ligand-metal complex ionic liquid;
in the catalytic oxidation catalyst, based on the weight of the carrier, the content of the active component is 2 wt% to 20 wt%, preferably 4 wt% to 10 wt%.

2. The catalytic oxidation catalyst according to claim 1, wherein the organic neutral ligand-metal complex ionic liquid is a mixture of EG-CholineCl-NiCl₂ and EG-CholineCl-FeCl₃;
preferably, based on the weight of the carrier, the content of each component in the active component comprises:
EG-CholineCl-NiCh 1.0 wt% to 10.0 wt%, more preferably 2.0 wt% to 4.0 wt%; and
EG-CholineCl-FeCl₃ 1.0 wt% to 10.0 wt%, more preferably 2.0 wt% to 4.0 wt%.

3. A preparation method of the catalytic oxidation catalyst according to claim 1 or 2, comprising: dissolving the active component in an organic solvent to obtain a solution containing the active component, and bringing the carrier into contact with the solution containing the active component in the presence of an inert gas atmosphere for impregnation; and drying and calcining the solid obtained after the impregnation to obtain the catalytic oxidation catalyst.

4. The preparation method according to claim 3, wherein the carrier is subjected to vacuum pretreatment before the impregnation; preferably, the conditions of the vacuum pretreatment comprise: the treatment time is 10 minutes to 60 minutes, and the vacuum degree is 96.0 KPa to 98.0 KPa;
preferably, the organic solvent is selected from a small molecular alcohol having a molecular weight of 10 g/mol to 1000 g/mol, more preferably methanol;
preferably, the inert gas is nitrogen;
preferably, the carrier is impregnated in excess of the solution containing the active component;
preferably, the impregnation time is 30 minutes to 240 minutes, more preferably 60 minutes to 120 minutes;
preferably, the conditions of the drying comprise: the temperature is 60°C to 150°C and the time is 1 hour to 5 hours; and
preferably, the conditions of the calcining comprise: the temperature is 300°C to 400°C and the time is 3 hours to 5 hours.

5. A deep treatment method of organic matters in an MDI saline, comprising the following steps:
(1) adjusting the pH value of the MDI saline, and adding an oxidizing agent for treatment; and
(2) bringing the MDI saline that has been treated in step (1) into contact with a catalytic oxidation catalyst for a catalytic oxidation reaction to obtain a deeply treated saline;
wherein the catalytic oxidation catalyst is the catalytic oxidation catalyst according to claim 1 or 2 or a catalytic oxidation catalyst prepared by the preparation method according to claims 3 or 4.

6. The deep treatment method according to claim 5, wherein in step (1), the composition of the MDI saline comprises:
TOC ≤ 60 mg/L;
TN ≤ 5 mg/L;
formic acid ≤ 60 mg/L;
phenol ≤ 30 mg/L; and
aniline ≤ 10 mg/L.

7. The deep treatment method according to claim 5 or 6, wherein the operating process conditions of step (1) comprise: the pH value is adjusted to 9 to 14, preferably 10 to 13; the residence time of adding the oxidizing agent is 0.25 hour to 2 hours, preferably 0.5 hour to 1 hour; and the temperature of adding the oxidizing agent is 20°C to 80°C, preferably 30°C to 70°C.

8. The deep treatment method according to any one of claims 5 to 7, wherein in step (1), the oxidizing agent is selected from liquid chlorine, chlorine gas, sodium hypochlorite or wastewater containing free chlorine, preferably sodium hypochlorite or wastewater containing free chlorine;
the addition amount of the oxidizing agent is calculated by the amount of TOC in the MDI saline, and n(TOC):n(available chlorine in the oxidizing agent, based on chlorine gas) equals to 0.2 to 5, preferably 0.5 to 2.

9. The deep treatment method according to any one of claims 5 to 8, wherein the operating process conditions of step (2) comprise: the pH value of the system is 9 to 14, preferably 10 to 13; the volume space velocity is 1 h⁻¹ to 10 h⁻¹, preferably 3 h⁻¹ to 8 h⁻¹; and the reaction temperature is 20°C to 80°C, preferably 30°C to 70°C.

10. The deep treatment method according to any one of claims 5 to 9, wherein after step (2), the obtained deeply treated saline is transported to an ion membrane caustic soda production apparatus of a chlor-alkali plant as a production raw material to prepare caustic soda, chlorine gas, hydrochloric acid and hydrogen gas required for MDI production.
